# EUROPÄISCHE PATENTSCHRIFT

(11) **EP 0 733 799 B1**
(45) Veröffentlichungstag und Bekanntmachung des Hinweises auf die Patenterteilung: **08.09.1999**
(21) Anmeldenummer: 96108104.9
(22) Anmeldetag: 07.10.1991
(51) Int. Cl.: F02M 63/06, F02M 51/04

(54) **Kraftstoff-Einspritzvorrichtung für Brennkraftmaschinen**
Fuel injection device for internal combustion engines
Dispositif d'injection de combustible pour moteurs à combustion interne

(30) Priorität: 26.02.1991 DE 4106015
(43) Veröffentlichungstag der Anmeldung: 25.09.1996
(62) Teilanmeldung aus: 95111191.3
(73) Patentinhaber: Ficht GmbH & Co. KG, 85614 Kirchseeon (DE)
(72) Erfinder: Heimberg, Wolfgang Dr., D-85560 Ebersberg (DE)
(74) Vertreter: Patentanwälte Dr. Solf & Zapf

(56) Entgegenhaltungen:
- EP-A- 0 174 261
- DE-C- 598 918
- GB-A- 2 193 262
- PATENT ABSTRACTS OF JAPAN vol. 10, no. 295 (M-523), 7.Oktober 1986 & JP 61 108865 A (NIPPON SOKEN), 27.Mai 1986,

## Beschreibung

Die Erfindung betrifft ein Verfahren und eine Vorrichtung zum Einspritzen von Kraftstoff für Brennkraftmaschinen der in den Oberbegriffen der Ansprüche 1 und 2 angegebenen Art.

Kraftstoff-Einspritzvorrichtungen für Brennkraftmaschinen sind weit verbreitet und haben sich in der Praxis in unterschiedlichen Bauformen durchgesetzt, denen jedoch verschiedene Mängel anhaften.

Für die Direkteinspritzung von Dieselkraftstoff oder auch die Einspritzung im sog. Vorkammerverfahren sind Pumpen gebräuchlich, die nockenbetätigte Plunger bzw. Kolben aufweisen, wobei die Nocken auf einer von der Motorkurbelwelle direkt angetriebenen Nockenwelle angeordnet sind. Die Mengenverstellung wird über in den Kolben bzw. Plungern eingearbeitete Steuerkanten bewerkstelligt. Pumpen dieser Bauart haben einen hohen Betriebsleistungsbedarf über den gesamten Kurbelweg der Brennkraftmaschine bzw. des Dieselmotors hinweg und sind insbesondere einer elektronischen Steuerung nicht zugänglich.

Demgegenüber ist eine nach dem Kraftstoff-Energiespeicherprinzip arbeitende Einspritzvorrichtung einer elektronischen Steuerung grundsätzlich zugänglich. Der Aufbau einer derartigen bekannten Einspritzvorrichtung soll nachfolgend anhand der Fig. 1 im Zusammenhang mit den Fig. 2 und 3 näher beschrieben werden, die typische Druckverläufe der Druckstoßeinrichtung zeigt, über die der Einspritzdüse Kraftstoff zugeführt wird.

Aus einem Kraftstoffbehälter 1 wird mittels einer Kraftstoffpumpe 2 mit einem Druck von etwa 3 bis 10 bar Kraftstoff in eine Rohrleitung 5 eingespeist, in welcher ein Druckregler 3 und eine Dämpfungseinrichtung 4 angeordnet sind. Am Ende der Leitung 5 ist ein beispielsweise elektromagnetisch betätigtes Absperrventil 6 vorgesehen, über welches im geöffneten Zustand von der Pumpe 2 beschleunigter Kraftstoff in den Vorratsbehälter 1 zurückgeführt wird. Durch schlagartiges Schließen des Sperrventils 6 wird die kinetische Energie des in der Leitung 5 sowie in der Leitung 7 strömenden Kraftstoffes in Druckenergie umgewandelt. Die Größe des dabei entstehenden Druckstoßes beträgt etwa 20 bis 80 bar, also etwa das 10fache des durch die Pumpe 2 erzeugten Strömungsdruckes in der Leitung 5, die auch Schwungleitung genannt wird. Der so am Absperrventil 6 entstehende Druckstoß wird zum Abspritzen des auf diese Weise beschleunigten Kraftstoffes über eine Einspritzdüse 10 genutzt, die über eine Druckleitung 9 an das Ventil 6 und damit an die Leitung 5 angeschlossen ist.

Durch die Verwendung eines elektromagnetisch betätigbaren Absperrventils ist diese bekannte Einspritzvorrichtung elektronisch steuerbar, und zwar mittels einer an das Ventil 6 angeschlossenen elektronischen Steuereinheit 8.

Der beim schlagartigen Schließen des Absperrventils 6 in der Schwungleitung 5 erzeugte Druckstoß wandert in Form einer Druckwelle mit Schallgeschwindigkeit durch die Leitungen 5, 7 und 9, wobei die Energie der Druckwelle in den Leitungen 5 und 9 zum Abspritzen von Kraftstoff über die Düse 10 zur Verfügung steht.

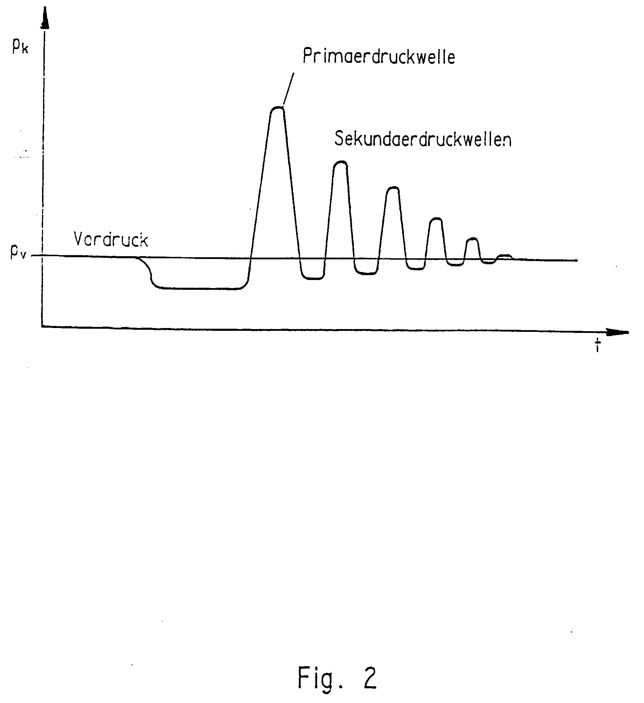

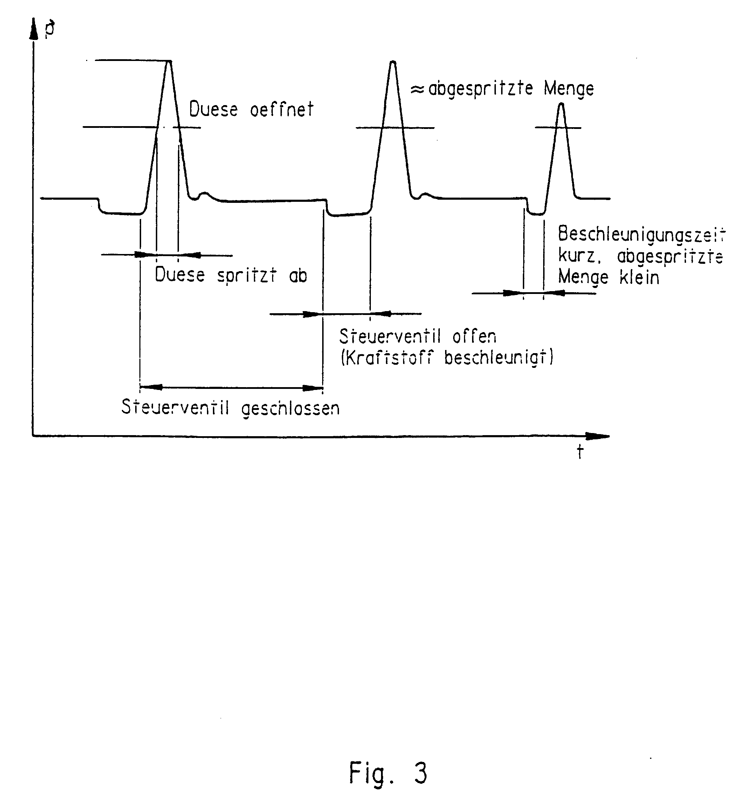

Die sich in der Schwungleitung 5 ausbreitende Druckwelle wird am Ausgang der Pumpe 2 reflektiert und wandert zum Absperrventil 6 zurück. Die Zeitdauer der Phase dieses direkten Druckstoßes entspricht der Laufdauer der Druckwelle durch die Schwungleitung 5 und bewirkt die Druckdauer an der Einspritzdüse 10. Nach der Phase dieses direkten Druckstoßes verbleibt in der Schwungleitung 5 eine Restdruckenergie, die in der Schwungleitung hin- und herläuft. Fig 2 zeigt einen typischen zeitlichen Verlauf des Druckstoßes in der Schwungleitung bei Abwesenheit der Dämpfungseinrichtung 4 in der Leitung 5. Dieser Druckverlauf ist durch eine Primärdruckwelle maximaler Energie und nachfolgende Sekundärdruckwellen mit zunehmend abnehmender Energie gekennzeichnet. Sämtliche dieser Druckwellen können grundsätzlich ein Einspritzen bewirken. Die Folge dieser Druckwellen beschränkt jedoch die erreichbare Arbeitsfrequenz des Systems, weshalb zugunsten definierter Arbeitsbedingungen die Sekundärdruckwellen unterdrückt werden. Hierzu dient die in der Schwungleitung 5 angeordnete Dämpfungseinrichtung 4, die sämtliche Sekundärdruckwellen unterdrückt. Ein entsprechender Druckverlauf ist in Fig. 3 gezeigt, wobei deutlich wird, daß zwischen aufeinanderfolgenden Primärdruckwellen die Sekundärdruckwellen bis auf eine geringe Restwelligkeit unterdrückt werden.

Eine solche Einspritzvorrichtung ist aus der EP 0 174 261 A bekannt, die mittels einer Nocken-gesteuerten Hubkolbenpumpe Kraftstoff intermittierend in eine Kraftstoffleitung fördert. Im Endbereich der Kraftstoffleitung ist eine Einspritzdüse angeordnet und kurz vor der Einspritzdüse ist ein Steuerventil angeordnet. Das Steuerventil kann eine Abzweigung in eine Abzweigleitung öffnen und schließen, so daß zu Beginn des intermittierenden Hubes der Kolbenpumpe Kraftstoff in die Abzweigleitung beschleunigt wird, wobei die sich in der Kraftstoffleitung befindliche Kraftstoffsäule beschleunigt wird. Zum Einspritzzeitpunkt ist das Steuerventil geschlossen, so daß der Kraftstoff nicht weiter durch die Abwzeigleitung abgeführt werden kann, sondern sich schlagartig ein Druck im Kraftstoff aufbaut, der zur Öffnung des Einspritzventils und zum Abspritzen des Kraftstoffes über das Einspritzventil führt. Das Abzweigventil soll hierbei im Bereich des Einspritzventils angeordnet sein, da die Verbindung zwischen dem Abwzeigventil und dem Einspritzventil relativ kurz ist. Diese Vorrichtung weist eine lange Kraftstoffleitung auf, in welcher sich die oben beschriebenen Druckwellen ausbilden und die erreichbare Arbeitsfrequenz beschränken. Im übrigen ist diese Einspritzvorrichtung durch die Nocken-gesteuerte Hubkolbenpumpe nicht frei ansteuerbar.

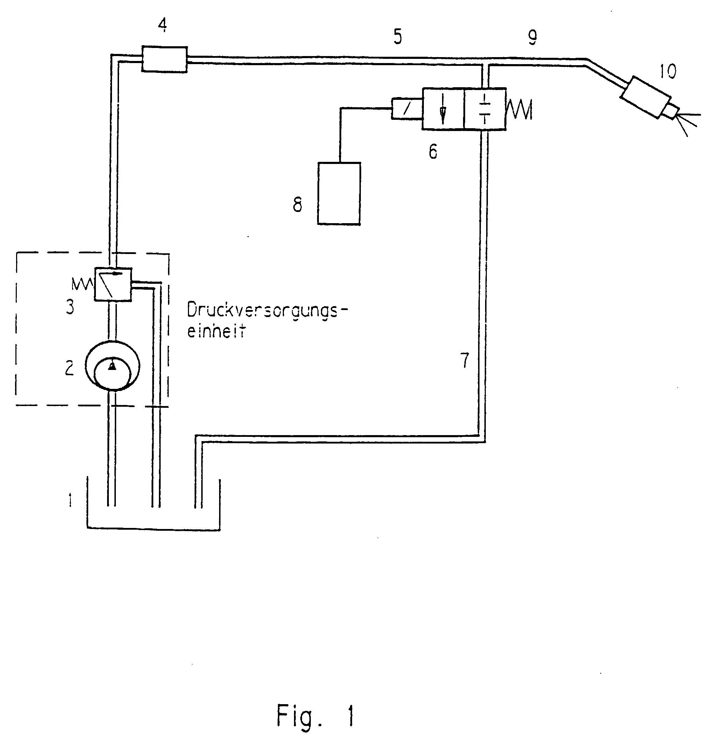

Im Vergleich zu der eingangs beschriebenen, einer elektronischen Regelung nicht zugänglichen Kraftstoff-Einspritzvorrichtung zeichnet sich die anhand der Fig. 1 bis 3 beschriebene herkömmliche Einspritzvorrichtung der gattungsgemäßen Art durch eine elektronische Steuerbarkeit aus, wobei insbesondere die Charakteristik des Einspritzdrucks grundsätzlich unabhängig von der Drehzahl des Verbrennungsmotors ist. Aufgrund des steilen Druckanstiegs und Druckabfalls in der Druckstoßeinrichtung ist ein schnelles Öffnen und Schließen der Einspritzdüse und damit ein guter Kraftstoffzerstäubungsverlauf erreichbar.

Nachteilig an der vorstehend beschriebenen bisherigen Kraftstoff-Einspritzvorrichtung ist es, daß eine Vordruckversorgung erforderlich ist, welche die für die Beschleunigung der Kraftstoff-Flüssigkeitssäule in der Schwungleitung notwendige Energie bereitstellt und welche kontinuierlich arbeitet.

Diese kontinuierlich arbeitende Vordruckversorgung macht einen entsprechenden Aufwand für die Druckkonstanthaltung notwendig. Zu diesem Zweck wird die von der Pumpe 2 zuviel geförderte Kraftstoffmenge über das Druckregelventil 3 abgesteuert, das über eine Rücklaufleitung mit dem Vorratsbehälter 1 in Verbindung steht. Diese Druckabsteuerung führt zu einem Energieverlust, und damit neben einer Erhöhung der Kraftstofftemperatur zu Druckänderungen am Einspritzventil 6, wodurch die Genauigkeit der Einspritzung beeinträchtigt wird. Darüber hinaus benötigt das Druckregelventil 3 stets eine Mindest-Abregelmenge, um stabil arbeiten zu können, wodurch ein weiterer Energieverlust auftritt. Da der Mengenstrombedarf an der Einspritzdüse 10 von der Motordrehzahl abhängt sowie von der jeweils abzuspritzenden Menge, muß die Druckversorgungseinheit bereits im Leerlauf den Mengenstrom für den Vollastbetrieb fördern, wodurch relativ große Kraftstoffmengen bei entsprechendem Energieverlust für das Gesamtsystem über das Druckregelventil 3 abgesteuert werden müssen.

Darüber hinaus eignet sich die vorstehend beschriebene Einspritzvorrichtunq mit einer kontinuierlich arbeitenden Pumpe zwar für eine Einspritzung in sog. Saugrohreinspritzmotoren, nicht jedoch für eine direkte Einspritzung in den Brennraum von Ottomotoren, da hierfür ein wesentlich höheres Druckniveau erforderlich ist, wodurch die für die Pumpe ständig benötigte Leistung nicht mehr akzeptable Größen erreicht und die Pumpe darüber hinaus wegen der hohen zu verarbeitenden Drücke Ausmaße und Gewichte erfordern würde, die insbesondere bei Fahrzeugmotoren nicht tragbar sind.

Es ist daher in der Vergangenheit der Versuch unternommen worden, diskontinuierlich arbeitende Einspritzvorrichtungen zu konstruieren, also Einspritzvorrichtungen, bei denen der für die Einspritzung benötigte Druck nicht permanent bereitgestellt werden muß, sondern erst unmittelbar vor oder zu dem Zeitpunkt erzeugt wird, zu dem er für den Einspritzvorgang benötigt wird. Eine entsprechende Vorrichtung ist beispielsweise aus der DE-PS 598 918 bekannt. Diese bekannte Vorrichtung basiert auf einem schweren Elektromagneten, der bei Erregung einen mit dem Anker verbundenen Kolben in einen Verdrängungsraum drückt, wodurch der Kraftstoff über eine Düse in den Brennraum der Brennkraftmaschine eingespritzt wird. Unmittelbar vor dem Einspritzvorgang wird ein Absperrventil geschlossen, das dann den Verdrängungsraum gegenüber einem Brennstoffeinlaß abdichtet. Dieser bekannten Vorrichtung haftet der gravierende Nachteil an, daß das zur Direkteinspritzung notwendige hohe Druckniveau die Verwendung eines sehr großen Elektromagneten benötigt, wodurch die gesamte Vorrichtung platzaufwendig und sehr träge wird, so daß sie sich für Fahrzeugmotoren weniger eignet.

In der Folge ist diese bekannte Einspritzvorrichtung deshalb mit dem Ziel kleiner Bauformen weiter entwickelt worden. Entsprechende Einspritzvorrichtungen sind aus der DD-PS 120 514 und der DD-PS 213 472 bekannt. Diese Vorrichtungen arbeiten nach dem System der Speicherunq von kinetischer Energie. Zu diesem Zweck ist es vorgesehen, den Anker des Elektromagneten und damit die Kraftstoff-Flüssigkeitssäule über eine längere Strecke zu beschleunigen, bevor der Druck aufgebaut wird, der zum Abspritzen des Kraftstoffes über die Düse erforderlich ist. Diese bekannten Vorrichtungen werden auch als Pumpen-Düsenelemente bezeichnet, die nach dem Festkörper-Energiespeicherprinzip arbeiten.

Gemäß der DD-PS 120 514 ist der vom Förderkolben durchsetzte Kraftstofförderraum in einem ersten Abschnitt mit axial angeordneten Nuten versehen, durch welche der Kraftstoff abzufließen vermag, ohne daß es zu einem wesentlichen Druckaufbau kommt, der im darauffolgenden zweiten Abschnitt des Förderraums zustandekommt, der keine Fluid-Abflußnuten aufweist.

Der Förderkolben wird daher durch den inkompressiblen Kraftstoff abgebremst, wodurch im Kraftstoff ein Druck aufgebaut wird, durch den der Widerstand des Einspritzventils überwunden wird, so daß es zum Abspritzen von Kraftstoff kommt. Nachteilig hierbei ist es, daß beim Eintauchen des Förderkolbens in den geschlossenen Abschnitt des Förderzylinders aufgrund ungünstiger Spaltbedingungen, nämlich einer großen Spaltbreite und einer kleinen Spaltlänge, große Druckverluste auftreten, die den notwendigen Druckaufbau für das Abspritzen ungünstig beeinflussen. Gemäß der DE-PS 213 472 ist es deshalb vorgeschlagen worden, im Förderzylinder einen Schlagkörper anzuordnen, so daß der Druckverlust trotz relativ großer Spaltbreiten vertretbar klein gehalten wird. Nachteilig ist hierbei jedoch, daß es durch den Schlagvorgang zu einem Verschleiß der aufeinandertreffenden Körper kommt. Weiterhin wird der Schlagkörper durch den Schlag zu Longitudinalschwingungen angeregt, die sich auf den Kraftstoff übertragen und dort als hochfreguente Druckschwingungen den Einspritzvorgang ungünstig beeinflussen.

Ein gravierender Nachteil der beiden vorstehend geschilderten Festkörper-Enerqiespeicher-Einspritzvorrichtungen besteht darin, daß der Einspritzverlauf des Kraftstoffes nur in begrenztem Maße steuerbar ist, sich also nur im beschränkten Umfange an die motorischen Erfordernisse anpassen läßt.

Die Aufgabe der Erfindung besteht darin, ein Verfahren und eine Vorrichtung zum Einspritzen von Kraftstoff für Brennkraftmaschinen der eingangs genannten Art zu schaffen, mit denen mit geringer optimal ausgenutzter Energie sehr schnell, sowie entkoppelt von motorischen Vorgängen präzise steuerbar Kraftstoff eingespritzt werden kann.

Gelöst wird diese Aufgabe durch ein Verfahren zum Einspritzen von Kraftstoff und durch eine Kraftstoffeinspritzvorrichtung mit den Merkmalen der Ansprüche 1 und 2. Vorteilhafte Weiterbildungen der Erfindung sind in den Unteransprüchen angegeben.

Die Erfindung schafft eine Kraftstoff-Einspritzvorrichtung nach dem dem Festkörper-Energiespeicherprinzip. Im Gegensatz zu dem diesbezüglichen oben geschilderten Stand der Technik, demnach in einem ersten Hubabschnitt einer Kolbenpumpe ein Rückströmen des Kraftstoffes stattfindet, gefolgt von einem Druckaufbau im darauffolgenden Hubabschnitt, ist es erfindungsgemäß vorgesehen, die Energie der Kolbenpumpe entlang des gesamten Förderhubes in einem geschlossenen Förderraum zu speichern, und die für ein Abspritzen über die Einspritzdüse benötigte Druckenergie dadurch aufzubauen, daß der Ablauf des verdrängten Kraftstoffes mittels eines Absperrventils schlagartig beendet wird. Vorteilhafterweise ist dabei das Absperrventil mit einem elektromagnetischen Antrieb realisiert, so daß sowohl das Ventil wie auch die Pumpe durch einen gemeinsamen elektronischen Steuerkreis in der benötigten Weise steuerbar sind. Ein wesentlicher Vorteil des erfindungsgemäß realisierten Festkörper-Energiespeicherpinzips ist, daß der Energiespeichervorgang, also die Beschleunigung des Kolbens durch die Zeitdauer des Kolbenvorhubs ohne eine wesentliche Druckerhöhung steuerbar ist. Durch die Möglichkeit eines variablen Kolbenvorhubes sowie dadurch, daß nach dem Schließen des Absperrventils im Kraftstoffzulauf zur Pumpe der Antriebsmagnet für die Pumpe verschieden lang eingeschaltet sein und in dieser Zeit mit verschieden hoher Intensität erregt werden kann, lassen sich die Einspritzlänge und -verlauf in der benötigten, vom jeweiligen Motorzustand abhängigen Weise beeinflussen. Durch beliebige Kombinationen des Vorförderhubs und der nachfolgenden Verdrängungsphase durch den erregten Absperrventilmagneten lassen sich sämtliche im Einzelfall benötigten Druckverläufe darstellen.

Nachfolgend wird die Erfindung anhand der Zeichnung näher erläutert; in dieser zeigen:
- Fig. 1: eine schematische Darstellung einer herkömmlichen Kraftstoff-Einspritzvorrichtung,
- Fig. 2 und 3: charakteristische Druckverläufe beim Abspritzen von Kraftstoff mit der Vorrichtung von Fig. 1,

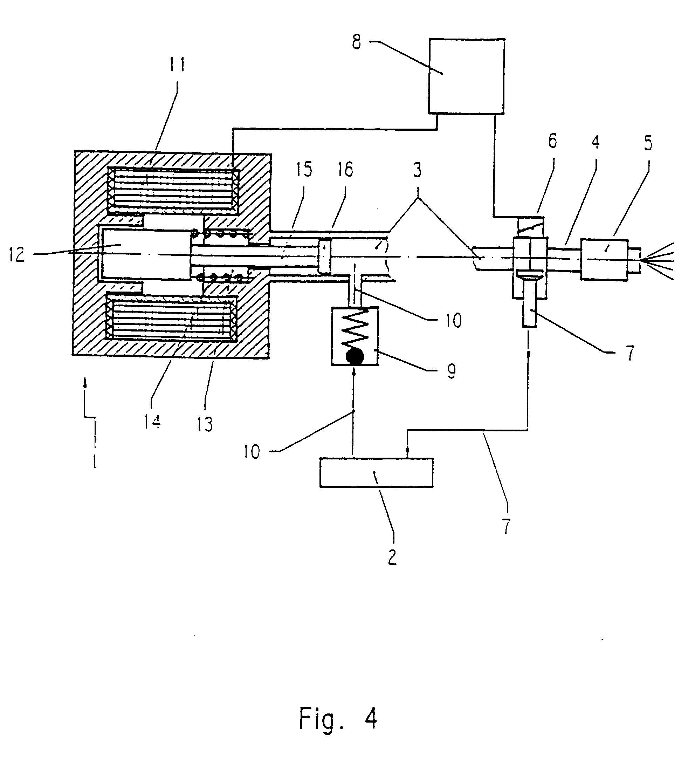

- Fig. 4: eine Ausführungsform einer Kraftstoff-Einspritzvorrichtung in schematischer Darstellung mit Rückführung des Kraftstoffs in den Vorratsbehälter in einem offenen Kraftstoffkreislauf,

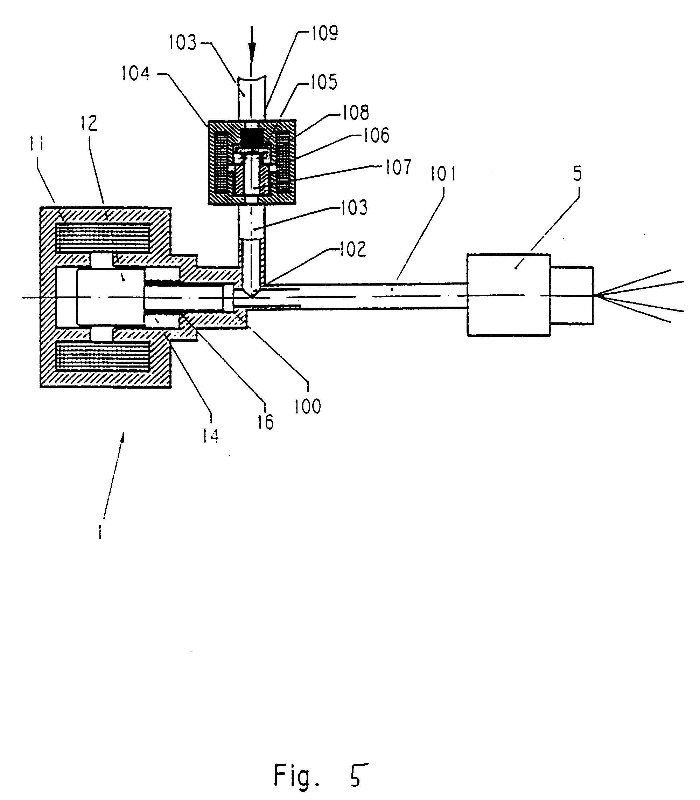

- Fig. 5: eine Ausführung der erfindungsgemäßen Kraftstoff-Einspritzvorrichtung und

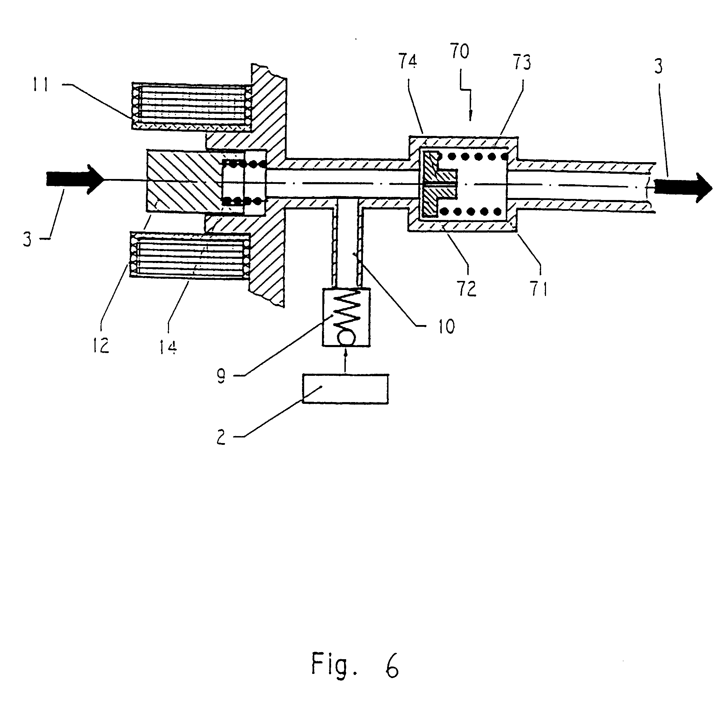

- Fig. 6: die Ausführungsform einer in der Schwungleitung angeordneten Dämpfungseinrichtung,

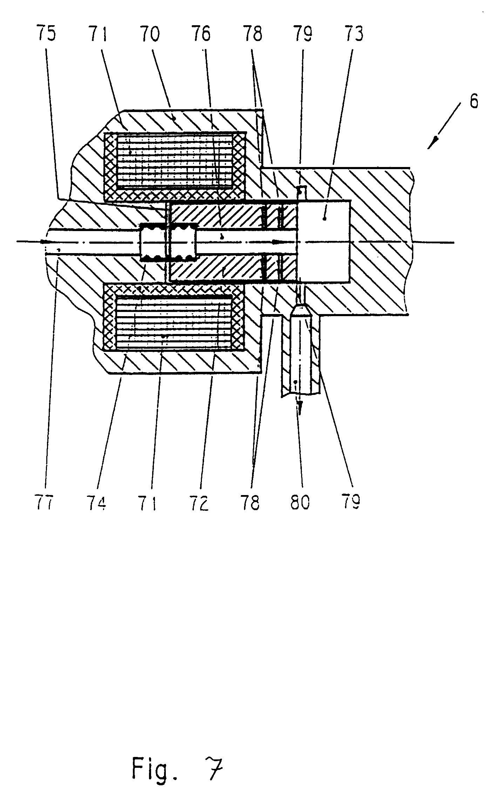

- Fig. 7: die bevorzugte Ausführungsform des Absperrventils zur Erzeugung eines modulierten Druckverlaufs des über die Düse abgespritzten Kraftstoffes,

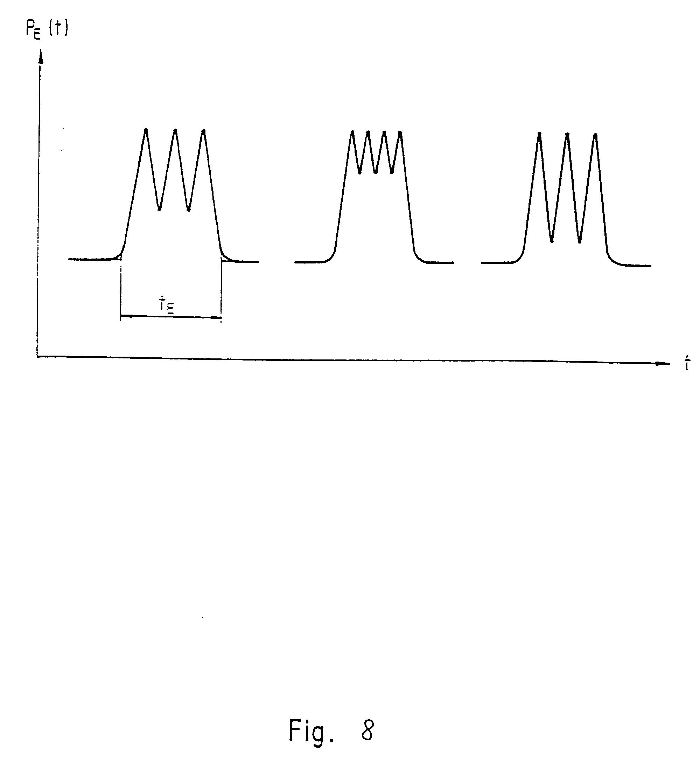

- Fig. 8: eine Darstellung von mit der Vorrichtung von Fig. 15 erzielbaren Druckverläufen des abgespritzen Kraftstoffes.

Die Fig. 1 bis 3 sind eingangs zum Stand der Technik beschrieben worden.

Die in Fig. 4 gezeigte Ausführungsform einer Kraftstoff-Einspritzvorrichtung basiert auf einer Kolbenpumpe 1 mit elektromagnetischem Antrieb zum Ansaugen von Kraftstoff aus einem Vorratsbehälter 2 sowie zum Beschleunigen des angesaugten Kraftstoffes in einer Schwungleitung 3, die über eine Druckleitung 4 an eine Einspritzdüse 5 angeschlossen ist. Ferner ist in einem Abzweig zwischen der Schwungleitung 3 und der Druckleitung 4 ein Absperrventil 6 angeordnet, das als elektromagnetisches Ventil ausgeführt ist und den Kraftstoff-Durchgang zu einer Rücklaufleitung 7 steuert, die an das Absperrventil 6 angeschlossen ist und in den Vorratsbehälter 2 mündet. Die Ansteuerung des Absperrventils 6 sowie der Kolbenpumpe 1 erfolgt über eine gemeinsame elektronische Steuereinrichtung 8, die an die Erregerspule des Magnetventils 6 sowie an eine Spule des Antriebselektromagneten der Kolbenpumpe 1 angeschlossen ist. Ferner ist ein Rückschlagventil 9 in einer Ansaugleitung 10 angeordnet, die das pumpenseitige Ende der Schwungleitung 3 mit dem Vorratsbehälter 2 verbindet.

Die Kolbenpumpe 1 umfaßt eine Magnetspule 11 mit einem im Spulendurchgang angeordneten Anker 12, der als zylindrischer Körper, beispielsweise als Vollkörper, ausgebildet ist, in einer Gehäuse-Bohrung 13 geführt ist, die sich parallel zur Zentrallängsachse der Ringspule 11 erstreckt und mittels einer Druckfeder 14 in eine Ruhestellung vorgespannt ist, in welcher er in der Fig. 4 am linken Ende der Gehäuse-Bohrung 13 mit seiner hinteren Stirnwand anliegt. Die andere Stirnwand des Ankers 12 wird von der Feder 14 beaufschlagt, die sich am rechten Ende der Bohrung 13 an der Gehäusewandung der Pumpe 1 abstützt. Die federbeaufschlagte Stirnseite des Ankers 12 ist fest mit einer Kolbenstange 15 verbunden, an derem freien Ende ein Kolben 16, der Förderkolben der Pumpe 1 befestigt ist, der an der Innenwandung der Schwungleitung 3 geführt ist und bevorzugt gegenüber dieser Wandung abgedichtet ist. Die Kolbenstange 15 durchsetzt eine Bohrung im Pumpengehäuse, deren Durchmesser geringer ist als der Durchmesser der den Anker 12 führenden Bohrung.

Die Ansaugleitung 10 mündet vor der außen gelegenen Stirnfläche des Förderkolbens 16 in die Schwungleitung 3. Das Rückschlagventil 9 in der Förderleitung 10 umfaßt beispielsweise als Ventilelement eine federvorgespannte Kugel, wobei Kugel und Feder so angeordnet sind, daß das kugelförmige Ventilelement im Rückschlagventil angehoben wird, wenn der Förderkolben 16 zum Ansaugen von Kraftstoff aus dem Behälter 2 seinen Saughub durchführt, also dann, wenn der Kolben 15 in Fig. 4 eine Hubbewegung nach links ausführt, was dann der Fall ist, wenn der Magnet 11 entregt ist und der Anker 12 in seine Ruhestellung durch die Feder 14 überführt wird. Im anderen Falle, nämlich beim Förderhub des Kolbens 16, entsprechend einer Kolbenbewegung in Fig. 4 nach rechts bei erregtem Elektromagneten 11, wird das Ventilelement des Rückschlagventils 10 in seine Sperrstellung überführt, so daß die Verbindung der Schwungleitung 3 zum Vorratsbehälter 2 unterbrochen ist.

Durch den Förderhub des Kolbens 16 wird die Masse des in der Schwungleitung 3 befindlichen Kraftstoffes beschleunigt und während einer durch die Steuereinrichtung 8 vorgegebenen Öffnungszeitdauer des Absperrventils 6 in die Rücklaufleitung 7 und über diese in den Behälter 2 überführt. Während dieses Zeitraums erfolgt also in erster Linie eine Beschleunigung des Kraftstoffes in den Leitungen 3 und 7, und der Kraftstoffdruck ist dabei so gering, daß die in an sich bekannter Weise beispielsweise hydraulisch blockierte Düse 5 einen Sperrzustand einnimmt, in welcher über die Düse kein Kraftstoff auszutreten vermag.

Wenn die Kraftstoffmenge in der Schwungleitung 3 (und der Rücklaufleitung 7) einen durch die Steuereinrichtung 8 in Abhängigkeit von aktuellen Motorbetriebsbedingungen vorgegebenen Beschleunigungswert erreicht hat, wird ebenfalls unter Steuerung der Einrichtung 8 das Absperrventil geschlossen, wodurch die kinetische Energie des in den Leitungen 3 und 4 strömenden Kraftstoffes schlagartig in eine Druckstoßenergie umgewandelt wird, deren Wert so hoch ist, daß der Schließwiderstand der Düse 5 überwunden und Kraftstoff über die Düse 5 abgespritzt wird.

Fig. 5 zeigt eine erfindungsgemäße Kraftstoff-Einspritzvorrichtung, die nach dem Festkörper-Energiespeicherprinzip arbeitet.

Die Vorrichtung gemäß Fig. 5 umfaßt eine Pumpe 1, deren Auslequng im wesentlichen derjenigen der Pumpe 1 von Fig. 4 entspricht, mit der Ausnahme, daß der Förderkolben nicht in einen Kolbenteil und eine Kolbenstange differenziert ist, vielmehr ist der Kolben 16 unmittelbar an den Anker 12 angeschlossen. Der Kolben 16 taucht in einen Verdrängungsraum 100 ein. An den Verdrängungsraum 100 schließt sich eine Druckleitung 101 an, an deren Ende das Einspritzventil 5 angeschlossen ist.

Am Anfang der Druckleitung 101, in unmittelbarer Nähe zu dem Verdrängungsraum 100 weist die Druckleitung 101 eine Öffnung 102 auf, an die eine Kraftstoffzufuhrleitung 103 angeschlossen ist. In der Kraftstoffzufuhrleitung 103 sitzt ein Absperrventil 104. Das Absperrventil 104 weist eine federbelastete Ventilplatte 105 auf, die mit einem Anker 106 verbunden ist. Der Anker 106 weist eine Mittelbohrung 107 und rechtwinklig dazu angeordnet eine Bohrung 108 auf. In der Ruhestellung ist das Absperrventil 104 geöffnet, d.h. der Anker 106 wird durch eine Feder 109 in eine Endlage gedrückt, in der Kraftstoff aus dem nicht dargestellten Ende der Zufuhrleitung 103 aus einem nicht dargestellten Vorratsbehälter um die Ventilplatte 105 durch die Bohrungen 108 und 107 zu der Druckleitungsöffnung 102 zu fließen vermag.

Der erfindungsgemäße Einspritzvorgang verläuft wie folgt. Bei vollständig gefüllter Druckleitung 101 wird zu einem geeigneten Zeitpunkt die Magnetspule 11 erregt, wodurch der Anker 12 aus seiner Endlage heraus beschleunigt wird, wobei der Kolben 16 in den Verdrängungsraum, der ebenfalls mit Kraftstoff gefüllt ist, eintaucht. Der von dem Kolben 16 verdrängte Kraftstoff fließt durch die Schwungleitungsöffnung 102, die Mittelbohrung 107, die Querbohrungen 108 und den vorratstankseitigen Teil der Leitung 103 ab. Zu einem bestimmten Zeitpunkt wird das Absperrventil 104 aktiviert, wobei die Ventilplatte 105 an ihrem Ventilsitz zu liegen kommt und das Ventil sperrt. Hierdurch wird die Schwungleitungsöffnung 102 verschlossen, so daß kein weiterer Kraftstoff aus dem Systemverdrängungsraum 100/Druckleitung 101 entweichen kann. Kolben 16 und Anker 12 werden als Folge schlagartig abgebremst und geben die in ihnen gespeicherte kinetische Energie an den inkompressiblen Kraftstoff ab, was eine Druckwelle zur Folge hat, durch welche Kraftstoff aus der Druckleitung 101 über das Einspritzventil 5 abgespritzt wird, das in an sich bekannter Weise hydraulisch betätigbar und federbelastet ausgeführt ist.

Die Ansteuerung der Kolbenpumpe 1 und des Absperrventils 104 erfolgt durch eine gemeinsame, nicht dargestellte Steuerelektronik, die es auch vorsehen kann, daß die Magnetspule 11 der Pumpe 1 nach dem Schließen des Ventils 104 eine bestimmte Zeit lang erregt bleibt. Wesentlich ist, daß sowohl das Zulaufventil 104 wie die Pumpe 1 steuerbar sind, so daß durch einen variablen Vorhub des Kolbens 15 der Pumpe 1, dies ist der Hub bei geöffnetem Ventil 104, sowie dadurch, daß nach dem Schließen des Zulaufventils 104 die Antriebsmagnetspule 11 der Pumpe 1 verschieden lang mit verschieden hoher Intensität eingeschaltet sein kann, die Kraftstoff-Einspritzmenge sowie deren Druckverlauf sich nahezu beliebig beeinflussen lassen, wodurch der Einspritzvorgang optimal an den jeweiligen Motor sowie dessen Betriebsbedingungen angepaßt werden kann.

Fig. 6 zeigt eine Ausführungsform einer Dämpfungseinrichtung 70, die gegebenenfalls in der Druckleitung 101 angeordnet sein kann. Die Dämpfungseinrichtung 70 besteht im wesentlichen aus einem federbelasteten Rückschlagventil, dessen durch eine Feder 73 vorbelastete Ventilplatte 72 eine Mittelbohrung geringeren Durchmessers 74 aufweist. Die Dämpfungseinrichtung hat die Aufgabe, Schwingungen zu dämpfen, die entstehen können, wenn die Druckwelle beim Auftreffen auf die Rückseite des Pumpenkolbens reflektiert wird und durch die Schwungleitung zurückwandert.

Bei manchen Verbrennungsverfahren ist es zweckmäßig, den Kraftstoff bei jedem Arbeitszyklus mehrfach kurz hintereinander in definierten Mengen einzuspritzen. Erfindunqsgemäß kann dabei die Zeit zwischen den einzelnen Druckspitzen von einigen 1/10 ms bis einigen ms betragen. Die Anzahl der Druckspitzen kann je nach Bedarf ebenfalls unterschiedlich sein. Eine solche Druckcharakteristik kann besonders für eine längere Einspritzdauer oder für dieselmotorische Verbrennungen sinnvoll sein.

Die beschriebene Druckcharakteristik (s. Fig. 8) kann durch wiederholtes, mehrfaches kurzzeitiges Schließen und Öffnen des Absperrventils erreicht werden. Es kann aber auch ein definiertes Prellen des Absperrventilkörpers auf seinem Dichtsitz erfolgen. Schließlich kann der Ablaufquerschnitt des Absperrventils 6 bei der Schließbewegung abwechselnd geöffnet und geschlossen werden. Eine dementsprechend konstruktive Ausbildung ist in Fig. 7 gezeigt. Dieses Ventil ist als elektromagnetisch betätigbares Ventil ausgebildet und umfaßt ein Gehäuse 70, in dem eine ringförmige Wicklung 71 des Elektromagneten eingebettet ist. Der Anker 72 des Solenoids ist als Ventilorgan ausgebildet. Der Anker 72 sitzt in einer Zentralbohrung 73 des Gehäuses und wird durch eine Druckfeder 74 in seine Ruhestellung vorgespannt, in der der Anker 72 mit seiner hinteren Stirnfläche an einer Anschlagfläche 75 anliegt, die das eine Ende der Bohrung 73 bildet. Der Anker 73 ist hohl ausgebildet, umfaßt also eine Mittelbohrung 76, die sich durch den gesamten Anker erstreckt, und die in etwa denselben Querschnitt aufweist wie eine Zulaufbohrung 77. An ihrem dem dem Anker 72 gegenüberliegenden Ende ist die Zulaufbohrung 77 durchmessererweitert, wobei dieselbe Bohrungserweiterung an dem gegenüberliegenden Ende des Ankers 72 für dessen Mittelbohrung 76 vorgesehen ist. Die durch diese Durchmessererweiterungen geschaffenen Schultern am Ende der Bohrung 77 und dem gegenüberliegenden Ende des Ankers 72 dienen als Auflager für die Druckfeder 74. Am vorderen Ende des kolbenförmigen Ankers bzw. Ventilorgans 72 sind in axialer Richtung voneinander beabstandet eine Anzahl radialer Schlitze 78 ausgebildet. Am in Hubrichtung des Ankers 72 vorderen Ende ist in der Bohrung 73 für den Anker eine Ringnut 79 ausgebildet, die in einen Ablauf 80 mündet.

Kraftstoff fließt von der Zulaufbohrung 77 durch die Mittelbohrung 76 in die Ablaufbohrung 80, wenn die Spule 71 von einem Erregerstrom durchflossen ist, so daß sich der Anker/das Ventilorgan 72 in Anlage an der Gehäusestirnfläche 75 befindet. Wird der Erregerstrom der Spule 71 abgeschaltet, so drückt die Feder 74 das Ventilorgan 72 nach rechts in eine Schließstellung. Bei der Schließbewegung des Organs 72 wird zunächst die Ringnut 79 verschlossen, so daß ein Druckstoß entsteht. Bei der weiteren Schließbewegung des Organs 72 kommen die im Organ 72 radial angeordneten Schlitze 78 mit der Ringnut 79 und damit der Ablaufbohrung 80 fluchtend aufeinanderfolgend zur Deckung, so daß sich der Druck zunächst abbauen kann, bis im weiteren Verlauf der Schließbewegung die Ringnut 79 wiederum vom kolbenförmigen Organ 72 verdeckt wird usw.. Durch die Anzahl der radialen, axial voneinander beabstandeten Schlitze 78 wird die Anzahl der erreichbaren Einspritzdruckspitzen bestimmt, wobei die Druckspitzenfolge bestimmt wird vom axialen Abstand der Schlitze 78 zueinander. Typische mit einem derartigen Absperrventil erreichbare Druckverläufe sind in Fig. 8 dargestellt, wobei das Ausmaß des Druckabfalls zwischen aufeinanderfolgenden Druckspitzen von der axialen Breite der Schlitze 78 im Ventilorgan 72 abhängt.

## Patentansprüche

1. Verfahren zum Einspritzen von Kraftstoff mit einer Kraftstoff-Einspritzvorrichtung, die nach dem Festkörper-Energiespeicher-Prinzip arbeitet, wobei ein in einem Verdrängungsraum (100) eines Pumpenzylinders einer mit einem Elektromagneten angetriebenen Hubkolbenpumpe (1) geführtes Hubkolbenelement Teilmengen des abzuspritzenden Kraftstoffs während einer nahezu widerstandslosen Beschleunigungsphase, während der das Hubkolbenelement kinetische Energie speichert, vor dem Abspritzen verdrängt und die Verdrängung plötzlich mit die Verdrängung unterbrechenden Mitteln gestoppt wird, so daß ein Druckstoß im in einer sich an den Verdrängungsraum anschließenden Druckleitung (101) befindlichen Kraftstoff erzeugt wird, indem die gespeicherte kinetische Energie des Hubkolbenelements auf den in der Druckleitung befindlichen Kraftstoff übertragen wird,
**dadurch gekennzeichnet**,
daß die Verdrängung mit einem in einer in die Druckleitung (101) mündenden Leitung (103) angeordneten Absperrventil (104) unterbrochen wird, so daß durch Sperren des Absperrventils (104) die Verdrängung plötzlich unterbrochen wird, wobei die Absperrung in unmittelbarer Nähe zum Verdrängungsraum (100), an der die Hubkolbenpumpe (1) mit der Einspritzdüse (5) verbindenden Druckleitung (101) angeordnet ist, durchgeführt wird.

2. Kraftstoff-Einspritzvorrichtung, die nach dem Festkörper-Energiespeicher-Prinzip arbeitet, wobei in einem Verdrängungsraum (100) eines Pumpenzylinders einer mit einem Elektromagneten angetriebenen Hubkolbenpumpe (1) ein Hubkolbenelement angeordnet ist und sich an den Verdränungsraum (100) anschließend eine Druckleitung (101) angeordnet ist, wobei Mittel (104) vorhanden sind, welche die Verdrängung von Teilmengen des abzuspritzenden Kraftstoffs während einer nahezu widerstandslosen Beschleunigungsphase, während der das Hubkolbenelement kinetische Energie speichert, plötzlich unterbrechen,
insbesondere Kraftstoff-Einspritzvorrichtungen zur Durchführung des Verfahrens nach Anspruch 1,
**dadurch gekennzeichnet,**
daß das die Verdrängung unterbrechende Mittel ein Absperrventil (104) ist, das in einer in die Druckleitung (101) mündenden Leitung (103) angeordnet ist, so daß durch Sperren des Absperrventils (104) die Verdrängung plötzlich unterbrochen wird, wobei das Absperrventil (104) in unmittelbarer Nähe zum Verdrängungsraum (100) an der die Hubkolbenpumpe (1) mit der Einspritzdüse (5) verbindenden Druckleitung (101) angeordnet ist.

3. Vorrichtung nach Anspruch 2,
**dadurch gekennzeichnet**,
daß das Absperrventil (104) ein elektromagnetisch betätigbares Absperrventil ist, das mit einer Steuereinrichtung (8) verbunden ist, die vorzugsweise auch die Pumpe (1) steuert.

4. Vorrichtung nach Anspruch 2 und/oder 3,
**dadurch gekennzeichnet**,
daß das Hubkolbenelement aus einem Kolben (16) ausgebildet ist, der unmittelbar an einen Anker (12) angeschlossen ist.

5. Vorrichtung nach Anspruch 4,
**dadurch gekennzeichnet**,
daß in dem Verdrängungsraum (100) der Kolben (16) zum Verdrängen des Kraftstoffes eindringt, wobei an den Verdrängungsraum (100) sich die Druckleitung (101) anschließt, an deren Ende ein Einspritzventil (5) angeschlossen ist.

6. Vorrichtung nach einem oder mehreren der Ansprüche 2 bis 5,
**dadurch gekennzeichnet**,
daß das Absperrventil (104) eine federbelastete Ventilplatte (105) aufweist, die mit einem Anker verbunden ist, wobei der Anker (106) eine Mittelbohrung (107) und rechtwinklig dazu eine Bohrung (108) aufweist.

7. Vorrichtung nach Anspruch 2 bis 6,
**dadurch gekennzeichnet**,
daß in der Druckleitung (101) eine Dämpfungseinrichtung (70) angeordnet ist, um beim Auftreffen der Druckwelle auf den Pumpenkolben (12) auftretende Reflexionen dieser Welle zu dämpfen.

8. Vorrichtung nach Anspruch 7,
**dadurch gekennzeichnet**,
daß die Dämpfungseinrichtung (70) als federbelastetes Rückschlagventil ausgelegt ist.

9. Vorrichtung nach einem oder mehreren der Ansprüche 2 bis 8,
**dadurch gekennzeichnet**,
daß eine elektrische Schaltung zum Ansteuern des elektromagnetischen Absperrventils (6) derart vorgesehen ist, daß dem Absperrventil (6) zum schnellen Öffnen ein höherer Strom als der erforderliche langzeitverträgliche Absperr-Ventilbetätigungsstrom zugeführt wird, wobei dieser Strom zum Offenhalten des Absperrventils (6) unmittelbar nach Erreichen der Ventilöffnungsstellung auf einen zeitlichen Mittelwert abgesenkt wird.

10. Vorrichtung nach Anspruch 9,
**dadurch gekennzeichnet**,
daß der Strom zwischen den Absperrventil-Schalttakten auf den Wert 0 abgesenkt wird.

## Claims

1. Process for fuel injection by means of a fuel injection device which operates according to the solid body energy storage principle, whereby a reciprocating piston element guided within a displacement volume (100) of a pump cylinder of an electromagnetically driven reciprocating piston pump (1) displaces quantities of the fuel to be injected during a virtually resistance-free acceleration phase in which the reciprocating piston element accumulates kinetic energy before fuel injection takes place, and the displacement is stopped abruptly by means provided to interrupt the said displacement, so that a pressure impulse is produced in the fuel present in a pressure line (101) beyond the displacement volume, in which the stored kinetic energy of the reciprocating piston element is transferred to the fuel present in the pressure line,
**characterised in that**
the displacement is interrupted by a cut-off valve (104) located in a line (103) which opens into the pressure line (101), so that when the cut-off valve (104) is closed the displacement is interrupted suddenly, such that this blocking takes place in the immediate vicinity of the displacement volume (100) on which the reciprocating piston pump (1) with the pressure line (101) leading to the injection nozzle (5) is arranged.

2. Fuel injection device operating according to the solid body energy storage principle, such that a reciprocating piston element is arranged in a displacement volume (100) of a pump cylinder of an electromagnetically driven reciprocating piston pump (1) and a pressure line (101) is arranged beyond the said displacement volume (100), and means (104) are provided which abruptly interrupt the displacement of quantities of the fuel to be injected, during a virtually resistance-free acceleration phase in which the reciprocating piston element accumulates kinetic energy,
in particular a fuel injection device for carrying out the process according to Claim 1,
**characterised in that**
the means for interrupting the displacement consist in a cut-off valve (104) arranged in a line (103) which opens into the pressure line (101), such that when the cut-off valve (104) is closed the displacement is interrupted abruptly, and the cut-off valve (104) is located in the immediate vicinity of the displacement volume (100) on which the reciprocating piston pump (1) with the pressure line (101) leading to the injection nozzle (5) is arranged.

3. Device according to Claim 2,
**characterised in that**
the cut-off valve (104) is an electromagnetically activated cut-off valve connected to a control device (8) which preferable also controls the pump (1).

4. Device according to Claim 2 and/or Claim 3,
**characterised in that**
the reciprocating piston element consists of a piston (16) connected directly to an armature (12).

5. Device according to Claim 4,
**characterised in that**
the piston (16) for displacing the fuel projects into the displacement volume (100), and beyond the displacement volume (100) there is the pressure line (101) to the end of which is connected an injection nozzle (5).

6. Device according to one or more of Claims 2 to 5,
**characterised in that**
the cut-off valve (104) comprises a spring-loaded valve disc (105) connected to an armature, such that the armature (106) has a central bore (107) and a hole (108) perpendicular thereto.

7. Device according to Claims 2 to 6,
**characterised in that**
a damping device (70) is arranged in the pressure line (101), whose purpose is to damp any reflections of the pressure wave produced when the pressure wave acts upon the pump piston (16).

8. Device according to Claim 7,
**characterised in that**
the damping device (70) is designed as a spring-loaded one-way valve.

9. Device according to one or more of Claims 2 to 8,
**characterised in that**
an electric circuit for the control of the electromagnetic cut-off valve (104) is provided, such that for the cut-off valve (104) to open rapidly a current is supplied higher than the cut-off valve operating current required for slow operation, and to hold the cut-off valve (104) open, this current is reduced to a lower time-average value immediately after the valve has reached its open position.

10. Device according to Claim 9,
**characterised in that**
the current is reduced to zero between the switching cycles of the cut-off valve.

## Revendications

1. Procédé pour injecter du carburant au moyen d'un dispositif d'injection de carburant qui travaille d'après le principe de l'accumulateur d'énergie à corps solide, dans lequel un élément piston alternatif circulant dans une chambre de refoulement (100) d'un cylindre de pompe appartenant à une pompe à piston alternatif (1) entraînée par un électro-aimant, refoule, avant l'éjection, des quantités partielles du carburant à éjecter pendant une phase d'accélération presque sans résistance, pendant laquelle l'élément piston alternatif accumule de l'énergie cinétique, et le refoulement est arrêté brusquement avec des moyens d'interruption du refoulement, de sorte qu'un choc de pression est produit dans le carburant qui se trouve dans une conduite de pression (101) raccordée à la chambre de refoulement, l'énergie cinétique accumulée de l'élément piston alternatif étant alors transférée au carburant qui se trouve dans la conduite de pression, caractérisé en ce que le refoulement est interrompu avec une soupape d'arrêt (104) montée dans une conduite (103) qui débouche dans la conduite de pression (101), de sorte que, sous l'action de la fermeture de la soupape d'arrêt (104), le refoulement est brusquement interrompu, la fermeture étant exécutée dans le voisinage immédiat de la chambre de refoulement (100), au droit de la conduite de pression (101) ) qui relie la pompe à piston alternatif (1) à la buse d'injection (5).

2. Dispositif d'injection de carburant qui travaille en appliquant le principe de l'accumulateur d'énergie à corps solide, dans lequel un élément piston alternatif est disposé dans une chambre de refoulement (100) d'un cylindre de pompe appartenant à une pompe à piston alternatif (1) entraînée par un électro-aimant ; et une conduite de pression (101) est disposée raccordée à la chambre de refoulement (100), dans lequel il est prévu des moyens (104) qui interrompent brusquement le refoulement de quantités partielles du carburant à éjecter pendant une phase d'accélération presque sans résistance pendant laquelle l'élément piston alternatif accumule de l'énergie cinétique, en particulier des dispositifs d'injection de carburant pour la mise en oeuvre du procédé selon la revendication 1, caractérisé en ce que le moyen qui interrompt le refoulement est une soupape d'arrêt (104) qui est agencée dans une conduite (103) débouchant dans la conduite de pression (101), de sorte que, sous l'effet de la fermeture de la soupape d'arrêt (104), le refoulement est brusquement interrompu, la soupape d'arrêt (104) étant disposée à proximité immédiate de la chambre de refoulement (100), au droit de la conduite de pression (101) qui relie la pompe à piston alternatif (1) à la buse d'injection (5).

3. Dispositif selon la revendication 2, caractérisé en ce que la soupape d'arrêt (104) est une soupape d'arrêt actionnée par voie électromagnétique, qui est reliée à un dispositif de commande (8) qui, de préférence, commande aussi la pompe (1).

4. Dispositif selon la revendication 2 et/ou la revendication 3, caractérisé en ce que l'élément de piston alternatif est constitué par un piston (16) qui est relié directement à une armature (12).

5. Dispositif selon la revendication 4, caractérisé en ce que le piston (16) plonge dans la chambre de refoulement (100) pour refouler le carburant et, à la chambre de refoulement (100), fait suite la conduite de pression (101) à l'extrémité de laquelle est raccordé une soupape d'injection (5).

6. Dispositif selon une ou plusieurs des revendications 2 à 5, caractérisé en ce que la soupape d'arrêt (104) présente un plateau de soupape (105) chargé par ressort qui est relié à une armature, l'armature (106) présentant un perçage central (107) et, perpendiculairement à celui-ci, un perçage (108).

7. Dispositif selon les revendications 2 à 6, caractérisé en ce qu'un dispositif amortisseur (70) est disposé dans la conduite de pression (101) pour amortir, lors de l'arrivée de l'onde de pression, les réflexions de cette onde qui atteignent le piston de pompe (16).

8. Dispositif selon la revendication 7, caractérisé en ce que le dispositif amortisseur (70) est constitué par un clapet anti-retour chargé par ressort.

9. Dispositif selon une ou plusieurs des revendications 2 à 8, caractérisé en ce qu'un circuit électrique pour la commande de la soupape d'arrêt électromagnétique (104) est prévu de manière qu'à la soupape d'arrêt (104), pour l'ouverture rapide, est envoyé un courant plus fort que le courant d'actionnement nécessaire de la soupape d'arrêt, compatible avec une longue durée, ce courant étant abaissé à une valeur moyenne temporaire immédiatement après avoir atteint la position d'ouverture de la soupape, pour le maintien de la soupape d'arrêt (104) à l'état ouvert.

10. Dispositif selon la revendication 9, caractérisé en ce que le courant est abaissé à la valeur 0 entre les cycles de commande de la soupape d'arrêt.
